# EUROPÄISCHE PATENTANMELDUNG

(11) **EP 2 292 923 A2**
(43) Veröffentlichungstag der Anmeldung: **09.03.2011**
(21) Anmeldenummer: 10174933.1
(22) Anmeldetag: 01.09.2010
(51) Int. Cl.: F03B 13/10

(54) **Unterwasserturbine**

(30) Priorität: 06.09.2009 CH 13732009
(71) Anmelder: Blatter, Max, 2504 Biel/Bienne (CH)
(72) Erfinder: Blatter, Max, 2504 Biel/Bienne (CH)
(74) Vertreter: Schneider Feldmann AG Patent- und Markenanwälte

(57) **Zusammenfassung**

Die Erfindung betrifft eine Unterwasserturbine mit einem permanentmagnetischen Laufrad zur Elektrizitätserzeugung, die eine einfach und kostengünstig fertigbare Konstruktion einer Turbine ermöglichen soll.

Die Unterwasserturbine besitzt dazu einen Laufradkörper (5), der aus permanentmagnetisiertem, hartmagnetischen Material besteht und gleichzeitig den Rotor eines permanent-erregten Generators bildet.

## Beschreibung

Die Erfindung betrifft eine Unterwasserturbine mit einem permanentmagnetischen Laufrad zur Elektrizitätserzeugung.

Klassische Anlagen zur Energieerzeugung aus Wasserkraft umfassen die voneinander getrennten Komponenten Turbine und Generator. Erst spätere Entwicklungen haben zu einer Kombination beider Elemente geführt, z. B. in der Straflo-Turbine, bei der das Turbinenlaufrad aussen einen Ring trägt, der seinerseits die Rotorerregerwicklung enthält. Laufrad und Rotor sind zwar zu einem Bauteil zusammengefügt, doch die Funktionen als solche sind immer noch voneinander getrennt.

Bei einer Turbine gemäss DE-A-102006043946 mit einem Ringgenerator ist die Turbinendrehachse fest an den Rotor gekoppelt und die Drehung der Turbinendrehachse erfolgt mittels einer Hohlwelle, in die ein feststehender Lagerzapfen eingesetzt ist, wobei das Turbinenlaufrad und der Rotor um den Lagerzapfen drehbar sind.

Auch bei einer Rohrturbinen-Generatoreinheit nach DE-A-102008017537 ist das Turbinenlaufrad drehstarr mit einer Antriebswelle verbunden und der Generatorläufer ist wenigstens mittelbar von der Antriebswelle angetrieben.

Der Erfindung liegt die Aufgabe zugrunde, eine Unterwasserturbine mit einem permanentmagnetischen Laufrad zur Elektrizitätserzeugung zu entwickeln, die geeignet ist, eine funktionale Verbindung zwischen Laufrad und Rotorgenerator herzustellen, um eine einfach und kostengünstig fertigbare Konstruktion einer Turbine zu ermöglichen.

Die Aufgabe ist mit den Merkmalen des Patentanspruchs 1 gelöst, vorteilhafte Ausgestaltungen sind in den abhängigen Ansprüchen offenbart.

Im Gegensatz zum Stand der Technik übernimmt ein permanentmagnetisches Laufrad zugleich die Funktion des Rotors eines Synchrongenerators der Turbine.

Der bevorzugt sechseckige äussere Gehäusequerschnitt ermöglicht es, mehrere Turbinen lückenlos neben- und/oder übereinander anzuordnen.

Dadurch kann eine einfach montierbare Einheit in grossen Stückzahlen kostengünstig gefertigt werden, die für den Einsatz in Binnengewässern wie auch im Meerwasser geeignet ist. Dies ermöglicht auch einen breiten Einsatz in Schwellen- und Entwicklungsländern.

Die Erfindung wird nachfolgend in einem Ausführungsbeispiel anhand einer Zeichnung näher beschrieben. In der Zeichnung zeigen die
Fig. 1: einen Stator der Unterwasserturbine im Querschnitt
Fig. 2: ein Laufrad der Unterwasserturbine, vereinfacht in Front- und Seitenansicht.

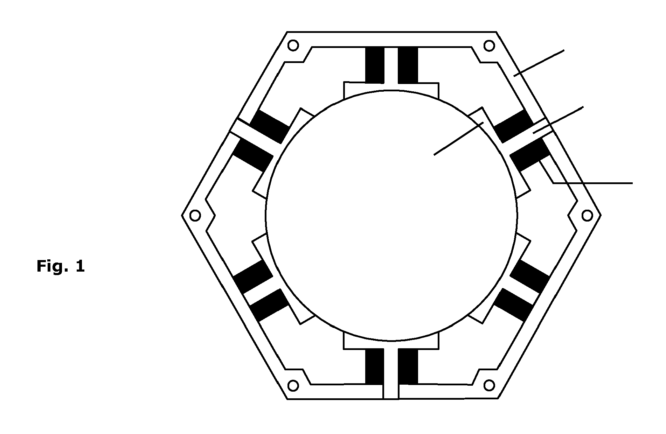

Fig. 1 zeigt den Stator des Generators, der in üblicher Technik aus einem Paket gestanzter, weichmagnetischer Dynamobleche gefertigt ist. Diese können, müssen aber nicht, aus Jochen 1, Schenkeln 2 und Polschuhen 3 bestehen. Auf den Schenkeln 2 (wenn vorhanden, sonst eingelegt in Nuten) sitzen die Wicklungen 4 aus Kupfer oder eventuell aus Aluminium. Der ganze Stator ist gegen den Rotor und gegen außen wasserdicht ausgeführt.

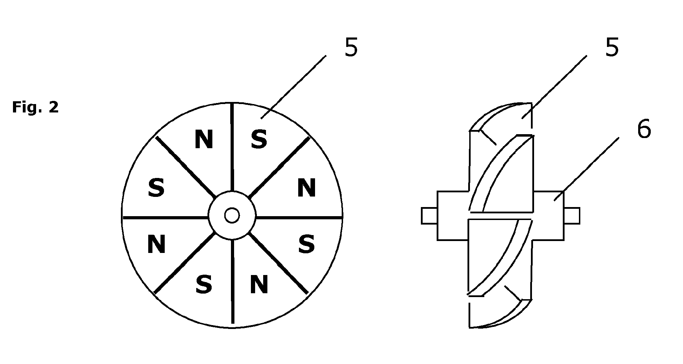

Fig. 2 zeigt im Aufriss und Seitenriss das Kernstück der Erfindung, das permanentmagnetische Laufrad. Es besteht aus dem Laufradkörper 5, der als Guss-, Sinter- oder kunststoffgebundenes Spritzgussteil aus einem hartmagnetischen Werkstoff gefertigt istz. B. eine (Fe-)Al-Ni-Co-Gusslegierung, und der Achse 6. Die einzelnen Segmente bilden einerseits die Schaufeln des Laufrades, wofür sie in ihrer Form strömungstechnisch optimiert wird, beispielsweise in Anlehnung an die Formgebung bei Kaplan-Turbinen mit starren Schaufeln. Andererseits bilden sie die permanent-magnetisierten Pole des Rotors, wobei ihr Querschnitt entsprechend der Berechnung des magnetischen Kreises dimensioniert ist. Der Luftspalt ist so zu wählen, dass die aufzubringende magnetische Feldstärke genügend weit unter der Koerzitivfeldstärke bleibt.

Die Formgebung der Laufradschaufeln kann z. B. mittels Modellversuch oder numerischer Computersimulation erfolgen. Die Dicke der Laufradschaufeln ist durch die Funktion des Laufrades als permanentmagnetischer Rotor vorgegeben. Sie muss so gewählt sein, dass der magnetische Fluss ohne Überschreiten der Sättigungsfeldstärke im magnetischen Material geführt werden kann. Die Formgebung der Schaufeln ist hingegen nach hydraulischen Gesichtspunkten optimiert, was mittels Modellversuch und/oder numerischer Computersimulation erfolgt. Die Werkstoffwahl des Laufrades bestimmt sich aus den magnetischen Eigenschaften, wobei zusätzlich eine Beständigkeit gegen chemische Korrosion, mechanische Erosion und Kavitationserosion gewährleistet sein muss. Dies kann eine zusätzliche Oberflächenbeschichtung erfordern.

Da die Kurzschlussleistung der Wicklungen auf die hydraulische Leistung zu begrenzen ist und eine Wärmeabfuhr durch das strömende Wasser gegeben ist, ist die thermische Belastbarkeit der Wicklungen für deren Dimensionierung zweitrangig.

Weitere, nicht näher bezeichnete Elemente vervollständigen die Unterwasserturbine in üblicher Weise. So verfügt der Stator über eine wasserdichte innere Auskleidung, z. B. aus Kunststoffrohr und mit aufgesetztem Sechskantflansch. Eine Einström- resp. Ausströmabdeckung umfasst einen Flansch, ein Schutzgitter, Montagelochungen, Nabe und Kabeldurchführungen für den elektrischen Anschluss der Statorwicklung.

Durch die starren Laufradschaufeln bedingt, läuft die Unterwasserturbine je nach Strömungsgeschwindigkeit mit variabler Drehzahl. Der Generator seinerseits wird als permanenterregte Synchronmaschine betrieben und liefert somit einen Wechselstrom mit gleichermaßen variabler Frequenz. Der Wechselstrom ist nachfolgend gleichzurichten, was für jede Turbine einzeln durch eine im Turbinengehäuse untergebrachte Diodenbrücke erfolgen kann. Die weitere Aufbereitung der gelieferten elektrischen Leistung, beispielsweise für die Einspeisung ins öffentliche Elektrizitätsnetz, erfolgt hingegen für die ganze, im Normalfall aus mehreren Turbinen bestehende Anlage. Ggf. können infolge der funktionalen Kopplung einzugehende konstruktive Kompromisse zu Abstrichen beim Turbinenwirkungsgrad führen.

## Patentansprüche

1. Unterwasserturbine zur Elektrizitätserzeugung, enthaltend einen Rotor und einen Generator resp. einen Stator und ein Laufrad, **dadurch gekennzeichnet, dass** das Laufrad einen Laufradkörper (5) aus einem hartmagnetischem Material umfasst und zugleich den permanent-magnetischen Rotor eines Generators bildet.

2. Unterwasserturbinen nach Anspruch 1, **dadurch gekennzeichnet, dass** der Werkstoff des Laufradkörpers (5) permanentmagnetisch ist und der *Querschnitt* der Schaufeln auf das Generatormagnetfeld, und die *Form* der Schaufeln auf die strömungstechnischen Verhältnisse ausgerichtet ist.

3. Unterwasserturbine nach Anspruch 1 oder 2, **dadurch gekennzeichnet, dass** deren Gehäuse einen sechseckigen äusseren Querschnitt aufweist, wodurch beliebig viele Unterwasserturbinen lückenlos neben- un/oder übereinander anordenbar sind.
